# EUROPEAN PATENT SPECIFICATION

(11) **EP 0 489 596 B1**
(45) Date of publication and mention of the grant of the patent: **12.04.1995**
(21) Application number: 91311351.0
(22) Date of filing: 05.12.1991
(51) Int. Cl.: F16K 37/00

(54) **Monitoring of check valves**
Überwachung von Rückschlagventilen
Surveillance de soupapes d'arrêt

(30) Priority: 06.12.1990 US 622903
(43) Date of publication of application: 10.06.1992
(73) Proprietor: B&W NUCLEAR TECHNOLOGIES, INC., Lynchburg, Virginia 24506 (US)
(72) Inventor: Ataman, Vedat T., Lynchburg, Virginia 24501 (US); Au-Yang, Man Keung, Lynchburg, Virginia 24502 (US); Key, Michael W., Lynchburg, Virginia 24502 (US)
(74) Representative: Pilch, Adam John Michael

(56) References cited:
- EP-A- 0 282 774
- EP-A- 0 410 317
- WO-A-88/03241

## Description

This invention relates to monitoring of check valves.

A check valve is a self-actuating, flow limiting device. Its principal moving part, the flapper assembly, consists of a disc supported by a hinged arm. In the normal (open) operating condition, dynamic pressure from the flowing fluid is enough to overcome the weight of the disc, keeping it in the open position. In the fully open position the flapper arm is pressed against a backstop. As the flow velocity decreases, the flapper assembly moves to a new, partially open or equilibrium position relative to fluid flow. When the fluid velocity is low enough, the weight of the disc causes the flapper assembly to be seated. The valve is then in its closed position.

A typical nuclear plant has approximately 100 safety related check valves ranging in size from 0.05m (2 inches) to 0.76m (30 inches). The majority of these valves, about 85%, control water flow. The remaining valves control steam or two-phase flow. Studies of safety-related check valves indicate typical problems such as a missing flapper, flapper flutter, backstop tapping, seat tapping, flapper pin and hinge pin wear, and flow leakage. Each of these problems can lead to undesirable consequences in the operation of the nuclear plant. Since the check valves are safety related, periodic monitoring and testing of the valves is essential and is required by the Nuclear Regulatory Commission. Before any non intrusive monitoring system was developed, check valves were disassembled, visually inspected, and then reassembled. The disadvantages of this process are that it is time consuming and the work must often be done in highly radioactive, restrictive spaces.

Nonintrusive monitoring systems which the applicants are aware of include the following.

US Patents Nos US-A-4,852,416 and US-A-4,782,702 disclose an ultrasonic testing apparatus and method that rely on a single transducer rotatably and pivotally mounted within a housing. The transducer is moved within the housing to achieve variable observation angles for determining the transducer position necessary to detect the position of the flapper assembly.

Acoustic monitoring systems record and analyse the noise generated within the valve. An accelerometer mounted on the outside of the valve body detects noise within the valve. This noise is amplified, recorded, and analysed to determine some of the information relating to valve functions.

In magnetic field monitoring, a permanent magnet is embedded in the check valve disc assembly. Monitoring of changes in the magnetic field provides information on movement of the disc assembly.

Problems with the above systems are as follows. Adjustable transducer mounts are expensive and may be fragile and unreliable in field use, especially in highly radioactive areas where movement of the operator is often limited due to heavy protective clothing and limited space. Operators of the adjustable mounts must also be specially trained in their use. Acoustic monitoring is a passive system and thus cannot be used to detect certain conditions such as disc position or low frequency disc flutter. In some cases the information obtained cannot be used to determine decisively a deficient condition in the valve. The major drawback of magnetic field monitoring is that valves in existing, operating nuclear plants must be disassembled to install the permanent magnet.

In view of the deficiencies in the above system and the environment in which the work must be carried out, there is a need for a check valve monitoring apparatus that is able to detect all of the above problems, that is able to determine the position of the flapper assembly, that is nonintrusive and does not require disassembly of the valve, that requires minimum operator training, and that requires minimum time to set up and acquire the data.

According to one aspect of the present invention there is provided a method for nonintrusive monitoring of a check valve, the method comprising: mounting an accelerometer on the body of the check valve; mounting an ultrasonic transducer on the body of the check valve; activating said accelerometer to detect audible sounds within the body of the check valve; causing said transducer to emit a series of ultrasonic signals into the body of the check valve and to detect the reflected signals; simultaneously recording signals corresponding to the audible sounds detected by said accelerometer and the reflected signals detected by said transducer; and processing the recorded signals to provide a visual representation of the conditions within the check valve.

According to another aspect of the present invention there is provided apparatus for monitoring a check valve, the apparatus comprising: an accelerometer mounted on the check valve; an ultrasonic transducer mounted on the check valve; means for simultaneously recording signals from said accelerometer and said ultrasonic transducer; and means for receiving and processing the recorded signals whereby a visual representation of conditions within the check valve is provided.

Preferred embodiments of the present invention address the aforementioned needs in a straightforward manner. What is provided is a dual system approach where the systems are used to complement and cross-check each other. In preferred embodiments, an acoustic system using an accelerometer is mounted on the outside wall of a check valve, and a fixed position transducer is mounted on the external wall of the valve body. Sounds detected by the accelerometer are amplified, digitised and recorded on digital tapes. A series of rapid firing pulses from the transducer and their echoes are also recorded on tape. The recorded signals are then processed to determine the movement and position of the flapper assembly at the time of monitoring. The results of the processing are displayed on a visual display device such as a computer monitor for comparison of the data from each system so that an analyst can determine the condition of the valve assembly.

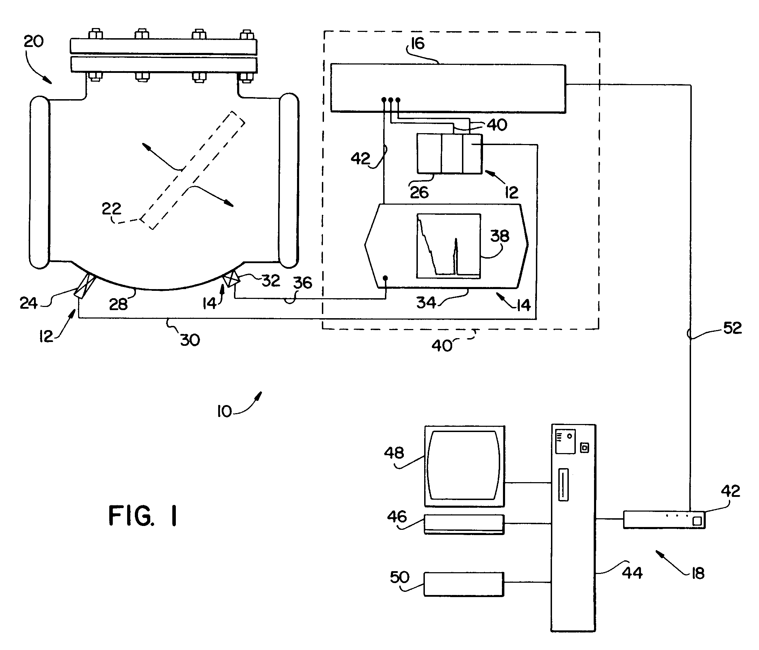

The invention will now be further described, by way of illustrative and non-limiting example, with reference to the single figure which is a schematic diagram of an embodiment of the invention.

Check valve monitor apparatus, generally referred to by the numeral 10, comprises an acoustic system 12, an ultrasonic system 14, means 16 for recording signals from the system 12, 14, and means 18 for receiving and processing the recorded data and displaying the processed data.

A check valve 20 is positioned in line with a conduit (not shown) for fluid flow therethrough. The principal moving part of the check valve 20 is a disc 22. For ease of illustration, only the disc 22 is shown. However, it should be understood that the disc 22 is hingedly mounted inside the check valve 20 for movement as indicated by the arrows. It is the movement of the disc 22 and the condition of the hinge mounting of the disc 22 that the apparatus 10 is designed to monitor.

The acoustic system 12 comprises an accelerometer 24 and an amplifier 26. The accelerometer 24 is mounted on the outside of the body 28 of the check valve 20 by any suitable means, such as by magnetic mounting. Although only one accelerometer is shown for ease of illustration, it should be pointed out that two accelerometers 24 are preferably used. The accelerometer 24 is a passive listening device that detects audible sounds generated within the check valve 20 such as sounds due to fluid flow, tapping of the disc 22 against the valve seat or backstop, and sounds generated by a loose or worn hinge pin on the disc 22. These sounds are converted to electrical signals and transmitted to the amplifier 26 via a signal cable 30. The amplifier 26 amplifies these low level sounds to an appropriate level for recording and listening by the operator.

The ultrasonic system 14 comprises an ultrasonic transducer 32 and a transducer controller 34 which are operatively connected via a signal cable 36. The transducer 32 may be mounted on the body 28 by any suitable means, such as by magnetic mounting, or mounting by means of a strap around the body 28, or the transducer 32 may be hand held against the body 28. As in normal transducer use, a couplant is used between the transducer and the body 28 to ensure good transmission of the ultrasonic signal from the transducer 32 into the body 28. In a manner known in the art, the transducer controller 34 calculates the time difference between the transmission and return of the ultrasonic signal to determine the position of the disc 22 relative to the transducer 32 and generates signals accordingly. This information may be visually represented on a display 38 which is normally an oscilloscope. This information can also be recorded for later analysis in a more convenient location.

The means 16 for recording signals from the acoustic system 12 and the ultrasonic system 14 receives signals via cables 40 and 42 respectively. The means 16 is preferably a digital tape recorder that is capable of simultaneously recording information received from the systems 12, 14 on separate channels. It is preferred that at least four separate recording channels are available: two for information from the acoustic system 12, one for information from the ultrasonic system 14, and one for information identifying the check valve being monitored. For protection against damage and radiation, the systems 12, 14 and the means 16 are preferably mounted in a protective housing 40 indicated by the dotted lines.

The means 18 for receiving, processing and displaying the recorded data comprises an interface device 42, a data processor 44, a keyboard 46, a display device 48, and a printer 50. The interface device 42 is used to make the recorded information received via a cable 52 compatible with the data processor 44. The data processor 44 is preferably a personal computer based system containing a computer program directed to the processing of the recorded information for the purpose of displaying the information on the display device 48 and/or printing the information on the printer 50. The information is displayed and printed in a graph form that synchronises disc movement with time and allows the analyst to compare the information obtained from the systems 12, 14. The display device 48 is preferably a colour monitor, and the printer 50 is preferably a colour printer. The keyboard 46 is used by the analyst to control the processing of the information to analyse and view various conditions of the valve and/or positions of the disc 22.

In operation, the accelerometer 24 and the ultrasonic transducer 32 are mounted on the outside of the check valve body 28. As previously mentioned, two accelerometers are preferably used. The transducer controller 34 is used to cause the transducer 32 to send a rapid series of ultrasonic signals into the check valve body 28 which signals are reflected and returned to the transducer 32 and sent to the transducer controller 34. The or each accelerometer 24 simultaneously detects audible sounds within the check valve body 28 and converts the detected sounds into electrical signals that are sent to the amplifier 26. The amplifier 26 amplifies these signals to usable levels. The means 16 simultaneously records the signals from the amplifier 26 and the transducer controller 34 on separate channels for processing and analysis. The means 16 is then connected with the processing means 18 through the interface device 42. The data processor 44 processes the information and provides information on the condition of the valve monitored in the form of a visual display and/or printout.

## Claims

1. A method for nonintrusive monitoring of a check valve (20), the method comprising:
mounting an accelerometer (24) on the body (28) of the check valve (20);
mounting an ultrasonic transducer (32) on the body (28) of the check valve (20);
activating said accelerometer (24) to detect audible sounds within the body (28) of the check valve (20);
causing said transducer (32) to emit a series of ultrasonic signals into the body (28) of the check valve (20) and to detect the reflected signals;
simultaneously recording signals corresponding to the audible sounds detected by said accelerometer (24) and the reflected signals detected by said transducer (32); and
processing the recorded signals to provide a visual representation of the conditions within the check valve (20).

2. Apparatus for monitoring a check valve (20), the apparatus comprising:
at least an accelerometer (24) mounted on the check valve (20);
an ultrasonic transducer (32) mounted on the check valve (20);
means (16) for simultaneously recording signals from said accelerometer (24) and said ultrasonic transducer (32); and
means (18) for receiving and processing the recorded signals whereby a visual representation of conditions within the check valve (20) is provided.

3. Apparatus as claimed in claim 2 including two accelerometers (24) mounted on the check valve (20).

4. Apparatus as claimed in claim 2 or claim 3 wherein the said means (16) comprises a digital tape recorder for recording the said signals on separate channels.

## Patentansprüche

1. Verfahren zum eingriffsfreien Überwachen eines Rückschlagventiles (20), wobei das Verfahren die Schritte aufweist:
Anbringen eines Beschleunigungsmessers (24) an dem Korpus (28) des Rückschlagventils (20),
Anbringen eines Ultraschallwandlers (32) an dem Korpus (28) des Rückschlagventiles (20),
Aktivieren des Beschleunigungsmessers (24), um in dem Korpus (28) des Rückschlagventiles (20) hörbaren Schall zu erfassen,
Veranlassen, daß der Wandler (32) eine Serie von Ultraschallsignalen in den Korpus (28) des Rückschlagventiles (20) sendet und daß die reflektierten Signale erfaßt werden,
gleichzeitiges Aufzeichnen von Signalen, welche dem hörbaren Schall entsprechen, der von dem Beschleunigungsmesser (24) erfaßt wird, sowie der reflektierten Signale, welche von dem Wandler (32) erfaßt werden, und
Verarbeiten der aufgezeichneten Signale um eine visuelle Darstellung der Zustände in dem Rückschlagventil (20) bereitzustellen.

2. Vorrichtung zum Überwachen eines Rückschlagventiles (20), wobei die Vorrichtung aufweist:
zumindest einen Beschleunigungsmesser (24), der an dem Rückschlagventil (20) montiert ist,
einen Ultraschallwandler (32) der an dem Rückschlagventil (20) montiert ist,
eine Einrichtung (16) für das gleichzeitige Aufzeichnen von Signalen von dem Beschleunigungsmesser (24) und dem Ultraschallwandler (32), und
eine Einrichtung (18) für das Empfangen und Bearbeiten der aufgezeichneten Signale, wodurch eine visuelle Wiedergabe von Zuständen innerhalb des Rückschlagventiles (20) bereitgestellt wird.

3. Vorrichtung nach Anspruch 2, welche zwei Beschleunigungsmesser (24) aufweist, die an dem Rückschlagventil (20) montiert sind.

4. Vorrichtung nach Anspruch 2 oder 3, wobei die Einrichtung (16) eine digitales Bandaufzeichnungsgerät aufweist, um die Signale auf getrennten Kanälen aufzuzeichnen.

## Revendications

1. Procédé pour la surveillance non intrusive d'un clapet de non-retour (20), le procédé comprenant :
le montage d'un accéléromètre (24) sur le corps (28) du clapet de non-retour (20) ;
le montage d'un transducteur à ultrasons (32) sur le corps (28) du clapet de non-retour (20) ;
l'activation dudit accéléromètre (24) pour détecter les sons audibles à l'intérieur du corps (28) du clapet de non-retour (20) ;
le fait d'amener ledit transducteur (32) à émettre une série de signaux ultrasonores dans le corps (28) du clapet de non-retour (20) et à détecter les signaux réfléchis ;
l'enregistrement simultané des signaux correspondant aux sons audibles détectés par ledit accéléromètre (24) et des signaux réfléchis détectés par ledit transducteur (32) ; et
le traitement des signaux enregistrés pour donner une représentation visuelle de l'état interne du clapet de non-retour (20).

2. Dispositif pour surveiller un clapet de non-retour (20), le dispositif comprenant :
au moins un accéléromètre (24) monté sur le clapet de non-retour (20) ;
un transducteur à ultrasons (32) monté sur le clapet de non-retour (20) ;
un moyen (16) pour enregistrer simultanément des signaux provenant dudit accéléromètre (24) et dudit transducteur à ultrasons (32) ; et
un moyen (18) pour recevoir et traiter les signaux enregistrés en donnant par ce moyen une représentation visuelle de l'état interne du clapet de non-retour (20).

3. Dispositif selon la revendication 2, comprenant deux accéléromètres (24) montés sur le clapet de non-retour (20).

4. Dispositif selon la revendication 2 ou la revendication 3, dans lequel ledit moyen (16) comprend un enregistreur numérique à bande pour enregistrer lesdits signaux sur des canaux distincts.
